# EUROPEAN PATENT SPECIFICATION

(11) **EP 2 006 134 B1**
(45) Date of publication and mention of the grant of the patent: **23.03.2011**
(21) Application number: 07110751.0
(22) Date of filing: 21.06.2007
(51) Int. Cl.: B60J 5/04, B60R 13/02

(54) **Vehicle door**
Fahrzeugtür
Portière de véhicule

(43) Date of publication of application: 24.12.2008
(73) Proprietor: Ford Global Technologies, LLC, Dearborn, MI 48126 (US)
(72) Inventor: Rehn, Mikael, SE 45290 Strömstad (SE)
(74) Representative: Romare, Laila Anette

(56) References cited:
- EP-A- 1 197 366
- EP-A- 1 686 011
- WO-A-01/32456
- DE-A1- 3 740 988
- JP-A- 56 079 022
- US-A1- 2003 164 624
- US-A1- 2004 135 394

## Description

### TECHNICAL FIELD

The present invention relates to a vehicle door wherein an interior trim module is arranged to be fastened to an inner panel by means of at least two fasteners.

### BACKGROUND ART

Manufacturers of motor vehicles have long been faced with the difficult task of constructing a door which not only provides easy ingress and egress but also performs a variety of other functions such as mounting a window, a window regulator mechanism and other auxiliary devices. Conventional, vehicle doors include an inner panel and an outer panel fixed together about their edges to form a hollow sheet metal or moulded plastic shell in at least the interior lower portion thereof. The inner panel typically includes a number of access apertures for permitting the insertion of auxiliary devices such as the window regulator mechanism and a door actuation device. However, the insertion and subsequent attachment of the door auxiliary devices tends to be a time consuming process that is inconvenient for the vehicle door assembler and costly to the vehicle manufacturer.

Previous attempts to reduce the time required for door assembly have failed to produce satisfactory results particularly with regard to the appearance and structure of the door. In one example, an inner panel sub-assembly is produced off-line and then attached during one of the final steps of vehicle assembly. However, some portions of the inner panel sub-assembly are exposed to an occupant's view after assembly. Unfortunately, difficulty often arises when attempting to match the colour of the components painted on-line with the colour of the components painted off-line. A common solution is to use a separate interior trim member for mounting auxiliary devices such as the window regulator and the window glass. This design requires that a door trim member comprising the said auxiliary devices and covering a major part of the inner door panel are brought together and assembled at a fairly late stage of the assembly process.

US 2004/135394 relates to a vehicular door trim member for attachment to an inner door panel of a vehicle. The vehicular door trim member is defined by a rigid sheet provided with one or more resilient clip fasteners. The resilient clip fasteners and the rigid sheet comprise an integral one-piece moulded construction. The vehicular door trim member is attached to the door by inserting the resilient clip fasteners into apertures formed within the inner door.

One problem with this solution is that the mounting of the interior trim is cumbersome, as each resilient clip fastener must be aligned with the said apertures prior to the insertion and securing operation. An incorrectly mounted resilient clip fastener may also cause the interior trim to move relative to the interior trim after assembly, so that a rattling noise may be generated during use of the vehicle. Subsequent removal of the interior trim to allow servicing, replacement or mounting of additional auxiliary devices, such as motors for power windows or loudspeakers, may cause resilient clip fasteners to deform or break. This requires an additional step of replacing one or more resilient clip fasteners.

Some of the above problems have been solved by the arrangement shown in DE 37 40 988. This document discloses a door comprising a door shell coupled to a door module. The door shell includes an outer panel secured to an inner panel, the inner panel having an opening therein. The door shell defines a hollow cavity. The door module includes a cassette and an interior trim panel coupled to the cassette. The door module further includes an attachment means for securing the door module to the door shell. The attachment means comprises a number of hooks arranged for cooperation with a corresponding number of cut-outs in the inner panel.

This arrangement solves the problem related to the subsequent removal of the interior trim. However, the problem relating to alignment of the fasteners with their respective apertures prior to the insertion and securing operation remains. Also, in order to allow the hook members to be inserted into said recesses, the width of the recesses is relatively large compared to the width of the hook members. This can cause the interior trim to move relative to the inner panel after assembly, whereby the problem relating to the generation of a rattling noise has not been solved. In addition, the hook members are in direct contact with a relatively sharp upper edge when mounted in a cavity, which may cause damage to the hook members over time.

The invention relates to an improved interior trim assembly for a vehicle and a fastener means for use in such an assembly. The interior trim assembly according to the invention is intended to solve the above problems relating to the assembly of interior trim to an inner panel, as well as the problem relating to relative movement between the interior trim and the inner panel, as stated above.

### DISCLOSURE OF INVENTION

The above problems have been solved by a method and an arrangement according to the appended claims.

According to a preferred embodiment, the invention relates to a vehicle door comprising a door shell including an outer panel secured to an inner panel. The inner panel may have an opening therein, and said door shell may define a hollow cavity. An interior trim module is arranged to be fastened to the inner panel by means of at least two fasteners. The vehicle door may be a front or rear side door or a rear door for an estate or delivery type vehicle.

Each fastener comprises a first portion attached to the inner panel and a second portion attached to the interior trim module, or vice versa, wherein said first and second portions comprise at least partially form-fitting male and female portions, respectively. In this context, the term "form-fitting" defines two interacting and positioning members arranged to be positive locking, or form closed (cf. the German term "Formschlüssig"), when said portions reach their assembled position. This is achieved by providing the respective members with a pair of facing and a pair of opposing control surfaces having substantially the same dimensions in at least two orthogonal directions, such as the horizontal X- and Y-directions. A further control surface, one on each portion, may be provided to define a final, assembled position in the third orthogonal direction, such as the vertical Z-direction. The form fitting male and female portions will provide an improved relative positioning of the respective inner panel and interior module during and after assembly. In addition, the form fitting feature will provide the assembled male and female portions with support in the X-, Y- and Z-directions between said portions, in order to prevent relative movement between the respective inner panel and interior module.

The male and female portions are each arranged integral with and extending from a flat base, wherein a respective male and female base is attached to the inner panel and interior trim module. The first and second portions are arranged for cooperation in a plane parallel to contacting surfaces of the inner panel and the interior trim module. This plane coincides with the main surface of the vehicle door and may be a substantially vertical plane. The respective male base and female base may be attached to the inner panel and interior trim module by a resilient snap in arrangement on the rear side of each base. The male and female portions may then be snapped into place in cut-outs corresponding to the shape of said resilient snap in arrangement. The cut-outs are located in the respective panel and interior module and cooperate with the male and female portions to maintain each portion in a fixed position. However, the bases can also be attached by means of an adhesive, or any other suitable fixing means. In this way, the male and female portions may be easily assembled and disassembled, while each portion is fixed to the respective panel and interior module. In order to avoid so called "rattle and squeak", it is preferable that the male and female portions are not movable relative to the respective panel and interior module.

A leading portion of at least one of the male and the female portions may comprise a guide surface, arranged to facilitate alignment and control of relative movement between the cooperating male and female portions during an initial period of the assembly sequence.

The male and female portions are preferably, but not necessarily, arranged to cooperate in a vertical plane. In this way, the inner panel and interior trim module are located displaced relative to each other in the vertical direction, with the male portions on the interior trim module located above and aligned with the female portions on the inner panel. Alternatively, the female portions on the interior trim module located above and aligned with the male portions on the inner panel. The interior trim module may then be lowered into position until the male and female portions reach their form-fitting position. According to a further alternative, the male and female portions may be arranged to cooperate in a horizontal plane.

The male portion comprises a shaped profile comprising a leg extending, preferably, but not necessarily, at right angles from the integral base and an enlarged profile having a predetermined cross-sectional shape is provided at the end of said leg. The female portion comprises a cavity formed by walls extending outwards from the base, which cavity is open at one end and closed at the opposite end. The cavity is provided with a slot located in a surface facing the male portion and its base, which slot extends from the said open end and is arranged to receive the leg of said shaped profile. According to the invention, the male portion has a T-shaped profile. Preferably, the width of the cross-bar of the T-shape profile equals the internal width of the cavity in the female portion along at least half the length of the male portion, when the male and female portions are in their assembled position.

The width of the cross-bar, and that of the corresponding cooperating section of the cavity, may vary along the longitudinal extension of the T-shaped profile. For instance, the width of the profile may increase from the leading end of the male portion and the width of the female portion may increase towards the open end of the cavity. In this way, the leading end of the male portion and the open end of the female portion may act as cooperating guide surfaces.

In their assembled position, opposing contact surfaces of the male and female portions may be arranged to extend along at least half the length of the male portion. According to the invention, the opposing contact surfaces are located along the underside of the T-shaped cross-bar, on either side of and along the leg, and on the inner surface of the cavity, on either side of the slot. In this way the cooperating form-closed male and female portions may guide the interior trim module into position relative to the inner panel during assembly, and locate and maintain said components in position after assembly. In their assembled position, the male portion and the female portion are preferably, but not necessarily, arranged to be form fitting along at least half the length of the male portion.

According to a further example, the opposing contact surfaces on the male and the female portions are provided with cooperating surfaces forming a snap-in arrangement. Such a snap-in arrangement may comprise a single projection or a rib located transverse to the direction of mounting, and a cooperating notch or a transverse groove. The snap-in arrangement is operable as an audible indication of correct mounting position.

The male and female portions may be made from any suitable plastic material, such as polypropylene (PP), and may be manufactured for instance by injection moulding.

In order to maintain the interior trim module and the inner panel in position after assembly, at least one removable fastener is arranged to connect the interior trim module and the inner panel and to prevent movement between the male and female portions. For example, such a removable fastener may comprise a screw or clip that is inserted and fastened in an aperture extending through overlapping portions of the interior trim module and the inner panel, when in their assembled position. According to one example, the removable fastener may be mounted at right angles to the direction of assembly of the interior trim module. The removable fastener may preferably be located in a position where it is not visible when the vehicle door is located in its closed position on a vehicle.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a schematic exploded view of a door arrangement with a according to one embodiment of the invention;
- Figure 2: shows an interior trim module provided with male portions of a fastener according to the invention
- Figure 3: shows an example of male and female portions making up a fastener according to the invention.

### EMBODIMENTS OF THE INVENTION

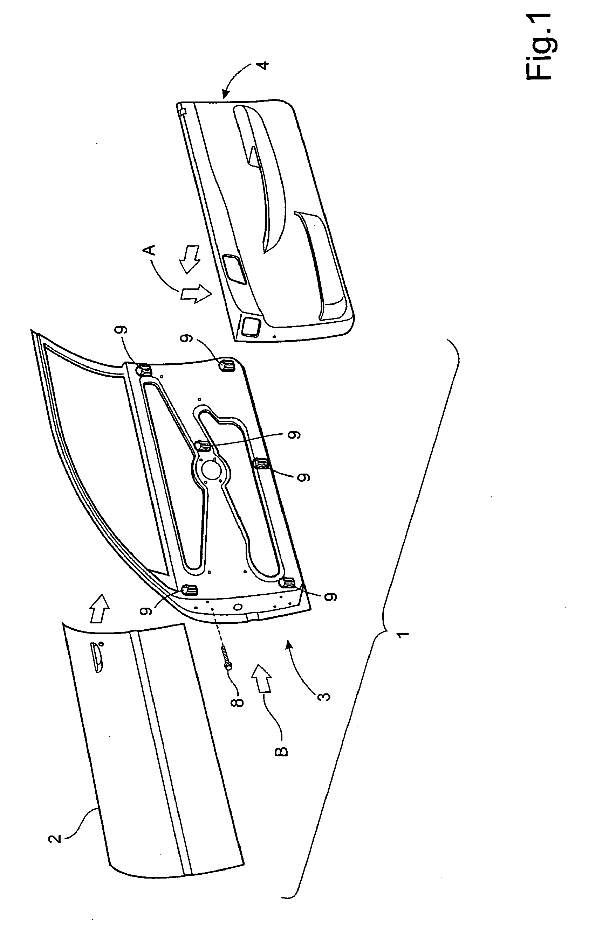

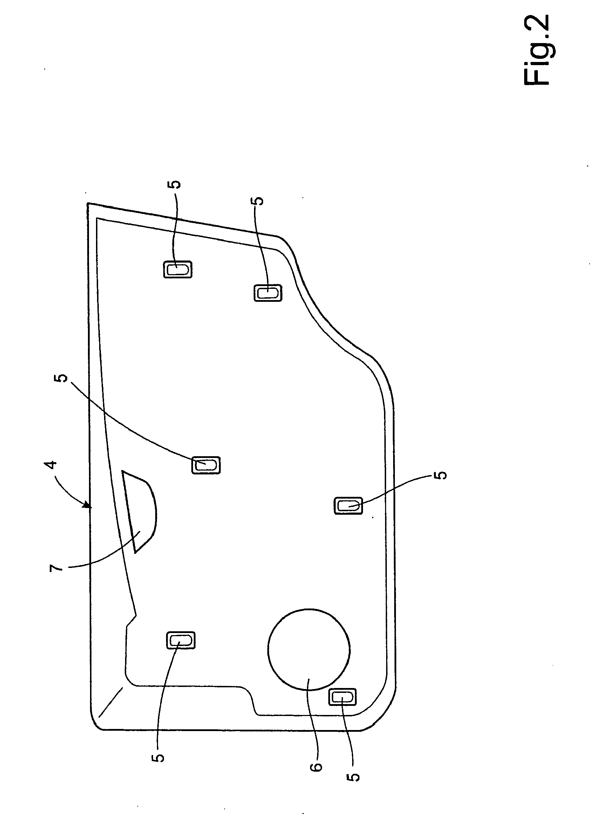

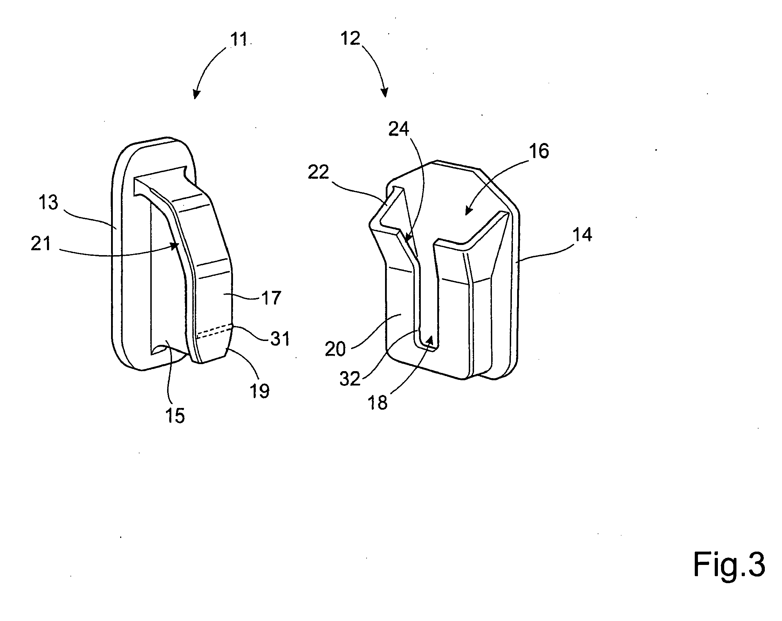

Figure 1 shows a schematic exploded view of a door arrangement with a according to one embodiment of the invention. The door arrangement 1 comprises a door shell 2, 3 including an outer panel 2 secured to an inner panel 3. The inner panel 2 is provided with openings therein, and said door shell defines a hollow cavity arranged for receiving auxiliary components (not shown), such as a window, window operating motors, loudspeakers and a door lock. The outer panel 2 is secured to the inner panel 3 by means of welding, soldering or by an adhesive, depending on the choice of materials in the respective panels. An interior trim module 4 is arranged to be fastened to the inner panel 3 by means of a number of fastener means (not shown) comprising cooperating male and female portions which will be described in connection with Figure 3 below. For this purpose, the inner panel 3 is provided with, in this case, six female portions 9 of the said fastener means according to the invention. These female portions 9 are arranged to cooperate with corresponding male portions, shown in Figure 2.

Figure 2 shows a side view of the interior trim module 4 of Figure 1, which interior trim module 4 is provided with, in this example, six male portions 5 of the said fastener means according to the invention. The location of the male portions 5 of the fastener means is dependent on the position and weight of any auxiliary components, such as a loudspeaker 6, attached to the interior trim module 4, and/or on the location of components subjected to external loads, such as a door opening handle 7. Consequently, a smaller and relatively light interior trim module for e.g. a sports car may use two-three fasteners, while a luxury car may require five or more fasteners depending on the number of auxiliary components.

In order to maintain the interior trim module and the inner panel in position after assembly, at least one removable fastener is arranged to connect the interior trim module and the inner panel and to prevent movement between the male and female portions. In this example, the removable fastener 8 comprises a screw that is inserted and fastened in an aperture extending through overlapping portions of the interior trim module 4 and the inner panel 3, when in their assembled position. In the example shown, the removable fastener 8 is mounted at right angles to the direction of assembly of the interior trim module 4. In Figure 1 the direction of assembly of the interior trim onto the inner panel 3 is indicated by the arrow A and the direction of mounting the removable fastener 8 is indicated by the arrow B. During assembly, the interior trim 4 is first moved towards the inner panel 3, so that the male portions 5 of the fastener means are aligned over the female portions 9. The interior trim 4 is then moved downwards, in the direction of the arrow A, bringing the male and female portions 5, 9 into form fitting contact with each other. Finally, the interior trim 4 and the inner panel are locked in position by the removable fastener 8, which is inserted through a first opening in the forward end surface of the interior trim and into a corresponding second opening in the inner panel 3, where it is screwed into place to lock the assembled parts together. The removable fastener is preferably located in a position where it is not visible when the vehicle door is located in its closed position on a vehicle.

Figure 3 shows an example of a male and a female portion 11,12 making up a fastener means according to the invention. Each fastener comprises a first portion attached to the inner panel and a second portion attached to the interior trim module, or vice versa, wherein said first and second portions comprise at least partially form-fitting male and female portions, respectively. The term "form-fitting" has been defined above. In the particular embodiment of Figure 1 and Figure 2, the male portion 11 is intended for attachment to the interior trim module 4 and the female portion 12 is intended for attachment to the inner panel 3.

The male and female portions 11, 12 are each arranged integral with and extending from a flat base 13, 14, respectively. The respective male base 13 and female base 14 can be attached to suitable cut-outs in the inner panel 3 and interior trim module 4 by a resilient snap in arrangement (not shown) on the rear side of each base. However, the bases 13, 14 can also be attached by means of an adhesive, or any other suitable fixing means.

The male portion 11 comprises a shaped profile comprising a leg 15 extending at right angles from the integral base 13 and an enlarged profile 17 having a predetermined cross-sectional shape is provided at the end of said leg 15. According to this example, the male portion 11 has a T-shaped profile where the enlarged profile comprises the cross-bar 17 of said T-shaped profile.

The female portion 12 comprises a cavity 16 formed by walls extending outwards from the base 14, which cavity 16 is open at an upper end 22 and closed at the opposite, lower end. The cavity 16 is provided with a slot 18 located in a surface 20 facing the male portion and its base 13, which slot 18 extends from the said open end 22 and is arranged to receive the leg 15 of said shaped profile. In this case, the width of the cross-bar 17 of the T-shaped profile equals the internal width of the cavity 16 in the female portion 12 along substantially half the length of the cross-bar 17, when the male and female portions 11, 12 are in their assembled, form-fitting position.

The width of the cross-bar 17, and that of the corresponding cooperating section of the cavity 16, varies along the longitudinal extension of the T-shaped profile cross bar 17. In this example, the width of the cross bar 17 increases from a tapering section of the leading end 19 of the male portion 11. Similarly, the width of the female portion 12 increases towards the open end 22 of the cavity 16. In this way, the leading end 19 of the male portion 11 and the open end 22 of the female portion 12 can act as cooperating guide surfaces during an initial period of the assembly sequence.

The height of the leg 15 is constant from the leading edge of the T-shaped profile, a predetermined distance along its length. Along this section of the cross-bar 17 the outer surface of the T-shaped profile on the male portion 11 will contact the outer surface of the base 14 of the female portion 12 when assembled. The height of the leg will then decrease gradually, until the cross-bar 17 joins the base 13. This arrangement provides added stability for the T-shaped profile, as well as additional contact surfaces between the male and female portions 11, 12. In their assembled position, said additional, opposing contact surfaces of the male and female portions 11, 12 are arranged to extend along at least half the length of the male portion 11 and substantially along the entire length of the slot 18. According the example shown, the opposing contact surfaces may be located along the underside of the T-shaped cross-bar 17, on either side of and along the leg 15, and on an outwardly angled, upper guide surface 24 of the cavity 16, on either side of the slot 18.

In this way the cooperating form-closed male and female portions 11, 12 can guide the interior trim module 4 into position relative to the inner panel 3 during assembly, and locate and maintain said components in position after assembly. In their assembled position, the male portion and the female portion are preferably, but not necessarily, arranged to be form fitting along at least half the length of the male portion.

According to a further example, the opposing contact surfaces on the male and the female portions 11, 12 are provided with cooperating surfaces forming a snap-in arrangement. As indicated with dotted lines in Figure 3, such a snap-in arrangement may comprise a single rib 31 located transverse to the direction of mounting, and a cooperating transverse groove 32. The snap-in arrangement is operable as an audible indication of the male and female portions 11, 12 reaching the correct mounting position.

## Claims

1. A vehicle door (1) comprising a door shell including an outer panel (2) secured to an inner panel (3), said inner panel (3) having an opening therein, said door shell defining a hollow cavity; an interior trim module (4) arranged to be fastened to the inner panel (3), and at least two fasteners wherein each fastener comprises a first portion attached to the inner panel (3) and a second portion attached to the interior trim module (4), or vice versa, **characterized in that** said first and second portions comprise at least partially form-fitting male and female portions (11; 12), respectively, extending from a flat base (13; 14),
that the male and female portions are provided with contact surfaces arranged for cooperation in a direction of assembly, in a plane parallel to contacting surfaces of the inner panel and the interior trim module,
that the male portion (11) comprises a leg (15) extending from the flat base (13) with an enlarged portion (17) at its end, thereby having a T-shaped profile and extending in the direction of assembly, wherein opposed contact surfaces (21) on the side edges of the enlarged portion (17) are arranged to cooperate with facing contact surfaces on walls formed at right angles to the flat base (14) in a cavity (16) extending in the direction of assembly in the female portion (12), in order to support the interior trim in a first orthogonal direction at right angles to the direction of assembly; and
that opposed contact surfaces on the enlarged portion (17) at right angles to the said side edges (21) are arranged to cooperate with facing contact surfaces comprising the flat base (14) and a surface facing the flat base in the cavity (16) in the female portion (12), in order to support the interior trim in a second orthogonal direction at right angles to the direction of assembly.

2. A vehicle door according to claim 1, **characterized in that** a leading portion of at least one of the male and the female portions comprise a guide surface.

3. A vehicle door according to claim 1 or 2, **characterized in that** the male and female portions are arranged to cooperate in a vertical plane.

4. A vehicle door according to claim 1 or 2, **characterized in that** the male and female portions are arranged to cooperate in a horizontal plane.

5. A vehicle door according to any one of the above claims, **characterized in that** the width of the cross bar in the T-shape profile equals the internal width of female cavity along at least half the length of the male portion.

6. A vehicle door according to any one of the above claims, **characterized in that** the female portion comprises a cavity (16) with a slot (18) in a surface (20) facing the male portion, which slot is arranged to receive the leg (15) of said shaped profile.

7. A vehicle door according to any one of the above claims, **characterized in that** the width of the profile increases from the leading end of the male portion and the width of the female portion increases towards the open end of the cavity (16).

8. A vehicle door according to any one of the above claims, **characterized in that**, in their assembled position, opposing contact surfaces of the male and female portions are arranged to extend along at least half the length of the male portion.

9. A vehicle door according to any one of the above claims, **characterized in that**, in their assembled position, the male portion and the female portion are arranged to be form fitting along at least half the length of the male portion.

10. A vehicle door according to any one of the above claims, **characterized in that** opposing surfaces on the male and the female portions are provided with cooperating surfaces forming a snap-in arrangement (31,32).

11. A vehicle door according to any one of the above claims, **characterized in that** the snap-in arrangement (31,32) is operable as an audible indication of correct mounting position.

12. A vehicle door according to any one of the above claims, **characterized in that** at least one removable fastener (8) is arranged to connect the interior trim module (4) and the inner panel (3) and to prevent movement between the male and female portions.

## Patentansprüche

1. Fahrzeugtür (1), umfassendeinen Türrahmen miteinem äußeren Panel (2), das an einem inneren Panel (3) befestigt ist, wobei das innere Panel (3) darin eine Öffnung aufweist, wobeider Türrahmen einenHohlraum, ein Innenverkleidungsmodul(4), das angeordnet ist, um an dem inneren Panel (3 ) befestigtzu werden, und zumindestzwei Befestigerfestlegt, wobei je der Befestigereinenersten Abschnitt, der an dem inneren Panel (3) befestigtist, und einenzweiten Abschnitt, der an dem Innenverkleidungsmodul (4) befestigtis t , oder umgekehrtumfasst,
**dadurch gekennzeichnet,**
**dass** der erste und zweite Abschnitt zumindest teilweise formschlüssigemännliche und weibliche Abschnitte (11 ; 12) umfassen, di e si chjeweils von einer flachen Basis (13; 14) erstrecken,
dassdi e männlichen und weiblichen Abschnitte mit Kontaktoberflächenversehen sind, die angeordnet sind, um in einerMontagerichtungin einer Ebeneparallel zu Kontaktoberflächendes inneren Panels und des Innenverkleidungsmoduls (4) z u kooperieren,
dassder männliche Abschnitt (11) ei n Bein (11), das sichvo n de r flachenBasis (13) erstreckt,mi t einem vergrößertenAbschnitt (17) an seinem Ende umfasst, wodurch sich einT-förmigesProfil ausbildet undsichin der Montagerichtungerstreckt, wobeigegenüberliegende Kontaktoberflächen (21) an de n Seitenrändernde s vergrößerten Abschnittes (17) angeordnet sind, um mit aufeinander zeigendenKontaktoberflächenan Wänden, di e in rechten Winkeln zu der flachen Basis (14) in einer Ausnehmung (16), diesichin der Montagerichtungin dem weiblichenAbschnitt (12) erstreckt, zu kooperieren, um die Innenverkleidungin einer erstenorthogonalen Richtung in rechten Winkeln zu der Montagerichtungabzustützen, und
dassgegenüberliegendeKontaktoberflächenan dem vergrößerten Abschnitt (17) in rechten Winkeln zu den Seitenrändern (21) angeordnet sind, um mit zugewandten Kontaktoberflächen,die dieflacheBasis (14) umfassen, und einerOberfläche,di e de r flachenBasisin de r Ausnehmung (16) in dem weiblichen Abschnitt (12) zugewandt ist, zu kooperieren,um die Innenverkleidungin einerzweiten orthogonalenRichtung in rechten Winkeln zu der Montagerichtungabzustützen.

2. FahrzeugtürnachAnspruchl, **dadurch gekennzeichnet, dass** ein Führungsabschnitt von dem männlichen und/oder dem weiblichen Abschnitt eine Führungsoberflächeumfasst.

3. Fahrzeugtür nach Anspruch 1 oder 2, **dadurch gekennzeichnet,dass** der männliche und der weiblich Abschnitt angeordnet sind, um in einer vertikalen Ebene zusammen zu wirken.

4. Fahrzeugtür nach Anspruch1 oder2, **dadurch gekennzeichnet,dass** der männliche und der weiblich Abschnitt angeordnet sind, um in einer horizontalen Ebene zusammenzuwirken.

5. Fahrzeugtür nach einem der vorhergehenden Ansprüche, **dadurch gekennzeichnet, dass** die Breitedes Querbalkensin dem T-förmigen Profilgleich der internen Breiteder weiblichen Ausnehmungentlang zumindest der Hälfte der Länge des männlichen Abschnittes ist.

6. Fahrzeugtür nach einem der vorhergehenden Ansprüche, **dadurch gekennzeichnet, dass** der weibliche Abschnitteine Ausnehmung (16) mit einem Schlitz (18) in einer Oberfläche (20), die auf den männlichen Abschnittzeigt, aufweist, wobei der Schlitz angeordnet ist, um das Bein (15) des geformten Profils aufzunehmen.

7. Fahrzeugtür nach einem der vorhergehenden Ansprüche, **dadurch gekennzeichnet, dass** die Breite des Profils von dem führenden Ende des männlichen Abschnittesansteigt und die Breitedes weiblichen Abschnittes in Richtung des offenen Endes der Ausnehmung (16) ansteigt.

8. Fahrzeugtür nach einem der vorhergehenden Ansprüche, **dadurch gekennzeichnet, dass** in ihrer montierten Position die gegenüberliegen den Kontaktoberflächen des männlichen und weiblichen Abschnittes angeordnet sind, um sichentlang zumindest der Hälfteder Längedes männlichen Abschnittes zu erstrecken.

9. Fahrzeugtür nach einem der vorhergehenden Ansprüche, **dadurch gekennzeichnet, dass** in ihrer montierten Position der männliche und weibliche Abschnitt angeordnet sind, um zumindest entlang der Hälfte der Länge des männlichen Abschnittesformschlüssig zu sein.

10. Fahrzeugtür nach einem der vorhergehenden Ansprüche, **dadurch gekennzeichnet, dass** gegenüberliegende oberflächen an demmännlichen und weiblichen Abschnitt mit zusammen wirkenden Oberflächen, die eine Einrastanordnung (31, 32) ausbilden, versehen sind.

11. Fahrzeugtür nach einem der vorhergehenden Ansprüche, **dadurch gekennzeichnet, dass** die Einrastanordnung (31, 32) als hörbare Anzeige der korrekten Anordnungsposition betreibbar ist.

12. Fahrzeugtür nach einem der vorhergehenden Ansprüche, **dadurch gekennzeichnet, dass** zumindest ein entfernbarer Befestiger (8) angeordnet ist, um das Innenverkleidungsmodul (4) und das innere Panel (3) zu verbinden und um eine Bewegungzwischen dem männlichen und weiblichen Abschnitt zu verhindern.

## Revendications

1. Portière de véhicule (1) comprenant une coque de portière comprenant un panneau extérieur (2) fixé à un panneau intérieur (3), ledit panneau intérieur (3) comportant une ouverture dans celui-ci, ladite coque de portière définissant une cavité creuse ; un module d'habillage intérieur (4) agencé pour être fixé au panneau intérieur (3), et au moins deux éléments de fixation, dans laquelle chaque élément de fixation comprend une première partie fixée au panneau intérieur (3) et une seconde partie fixée au module d'habillage intérieur (4), ou vice versa, **caractérisée en ce que** lesdites première et seconde parties comprennent au moins partiellement des parties mâle et femelle à complémentarité de forme (11 ; 12), respectivement, s'étendant à partir d'une base plate (13 ; 14),
■ que les parties mâle et femelle sont pourvues de surfaces de contact agencées pour la coopération dans une direction d'assemblage, dans un plan parallèle à des surfaces de contact du panneau intérieur et du module d'habillage intérieur,
■ que la partie mâle (11) comprend un segment (15) s'étendant à partir de la plaque de base (13) avec une partie agrandie (17) à son extrémité, possédant ainsi un profil en forme de T et s'étendant dans la direction d'assemblage, dans laquelle des surfaces de contact opposées (21) sur les bords latéraux de la partie agrandie (17) sont agencées pour coopérer avec des surfaces de contact opposées sur des parois formées à angle droit par rapport à la plaque de base (14) dans une cavité (16) s'étendant dans la direction d'assemblage dans la partie femelle (12), afin de supporter l'habillage intérieur dans une première direction orthogonale à angle droit par rapport à la direction d'assemblage ; et
■ que des surfaces de contact opposées sur la partie agrandie (17) à angle droit par rapport auxdits bords latéraux (21) sont agencées pour coopérer avec des surfaces de contact opposées comprenant la plaque de base (14) et une surface faisant face à la plaque de base dans la cavité (16) dans la partie femelle (12), afin de supporter l'habillage intérieur dans une seconde direction orthogonale à angle droit par rapport à la direction d'assemblage.

2. Portière de véhicule selon la revendication 1, **caractérisée en ce qu'**une partie avant d'au moins une des parties mâle et femelle comprend une surface de guidage.

3. Portière de véhicule selon la revendication 1 ou 2, **caractérisée en ce que** les parties mâle et femelle sont agencées pour coopérer dans un plan vertical.

4. Portière de véhicule selon la revendication 1 ou 2, **caractérisée en ce que** les parties mâle et femelle sont agencées pour coopérer dans un plan horizontal.

5. Portière de véhicule selon une quelconque des revendications précédentes, **caractérisée en ce que** la largeur de la barre transversale dans le profil en forme de T est égale à la largeur interne de la cavité femelle le long d'au moins la moitié de la longueur de la partie mâle.

6. Portière de véhicule selon une quelconque des revendications précédentes, **caractérisée en ce que** la partie femelle comprend une cavité (16) avec une fente (18) dans une surface (20) faisant face à la partie mâle, laquelle fente est agencée pour recevoir le segment (15) dudit profil en forme.

7. Portière de véhicule selon une quelconque des revendications précédentes, **caractérisée en ce que** la largeur du profil augmente à partir de l'extrémité avant de la partie mâle et la largeur de la partie femelle augmente vers l'extrémité ouverte de la cavité (16).

8. Portière de véhicule selon une quelconque des revendications précédentes, **caractérisée en ce que**, dans leur position assemblée, des surfaces de contact opposées des parties mâle et femelle sont agencées pour s'étendre le long d'au moins la moitié de la longueur de la partie mâle.

9. Portière de véhicule selon une quelconque des revendications précédentes, **caractérisée en ce que**, dans leur position assemblée, la partie mâle et la partie femelle sont agencées pour être complémentaires en forme le long d'au moins la moitié de la longueur de la partie mâle.

10. Portière de véhicule selon une quelconque des revendications précédentes, **caractérisée en ce que** des surfaces opposées sur les parties mâle et femelle sont pourvues de surfaces coopératives formant un agencement d'encliquetage (31, 32).

11. Portière de véhicule selon une quelconque des revendications précédentes, **caractérisée en ce que** l'agencement d'encliquetage (31, 32) peut fonctionner en tant qu'indication audible de position de montage correcte.

12. Portière de véhicule selon une quelconque des revendications précédentes, **caractérisée en ce qu'**au moins un élément de fixation amovible (8) est agencé pour relier le module d'habillage intérieur (4) et le panneau intérieur (3) et pour empêcher le mouvement entre les parties mâle et femelle.
